Europäisches Patentamt

European Patent Office

Office européen des brevets

(11) Publication number: **0 212 583 B1**

# EUROPEAN PATENT SPECIFICATION

(45) Date of publication of patent specification: **04.12.91**

(51) Int. Cl.⁵: **A23L 3/40, A23B 7/02, A23B 7/08, A23B 4/03**

(21) Application number: **86111277.9**

(22) Date of filing: **14.08.86**

(54) Method of manufacturing dried food and plant products.

(30) Priority: **15.08.85 JP 178609/85**
**23.10.85 JP 235332/85**

(43) Date of publication of application:
**04.03.87 Bulletin 87/10**

(45) Publication of the grant of the patent:
**04.12.91 Bulletin 91/49**

(84) Designated Contracting States:
**BE CH DE FR GB IT LI LU NL**

(56) References cited:
**GB-A- 582 611**
**US-A- 3 194 670**
**US-A- 3 425 848**

**FOOD TECHNOLOGY, vol. 20, October 1966, pages 125-128; J.D. PONTING et al.: "Osmotic dehydration of fruits"**

**IDEM**

(73) Proprietor: **Toshimitsu KAWAMURA**
**4-5-15 Sagamidai**
**Sagamihara shi Kanagawa ken(JP)**

(72) Inventor: **Toshimitsu KAWAMURA**
**4-5-15 Sagamidai**
**Sagamihara shi Kanagawa ken(JP)**

(74) Representative: **Vossius & Partner**
**Siebertstrasse 4 P.O. Box 86 07 67**
**W-8000 München 86(DE)**

Rank Xerox (UK) Business Services

CHEMICAL ABSTRACTS, vol. 92, no. 3, January 1980, page 547, no. 20830y, Columbus, Ohio, US; M.S. RAMAMURTHY et al.: "Osmotic dehydration of fruits: possible alternative to freeze drying" & INDIAN FOOD PACKER 1978, 32(1), 108-11

CHEMICAL ABSTRACTS, vol. 88, no. 25, 19th June 1978, page 582, no. 188507q, Columbus, Ohio, US; & JP-A-78 09 343 (RIKEN VITAMIN OIL CO., LTD) 15-07-1976

CHEMICAL ABSTRACTS, vol. 72, no. 15, 13th April 1970, page 269, no. 77657p, Columbus, Ohio, US; & SU-A-250 657 (MOLDAVIAN SCIENTIFIC-RESEARCH INSTITUTE OF THE FOOD INDUSTRY) 12-08-1969

CHEMICAL ABSTRACTS, vol. 90, no. 5, January 1979, page 397, no. 37832g, Columbus, Ohio, US; & HU-A-15 516 (KOZPONTI ELEL-MISZERIPARI KUTATO INTEZET) 28-09-1978

## Description

The present invention relates to a method for preparing dried food and plant products, and more particularly, to a method of processing e.g. fruits, mushrooms, vegetables, plants, meat, fish and sea shells to dried products which can be used as they are, or which can be further processed, if necessary, by pulverization. for instance, to be used as material for various processed foodstuffs, pharmaceuticals (drugs) or fragrances.

A known method to obtain dried food products is the vacuum frying method. According to said method, raw materials such as sliced vegetables, are immersed in a sugar solution for 6 to 12 hours and fried in oil in an autoclave. The materials are then removed from the oil and allowed to drain. This method is not very efficient as it requires a long time for immersion, frying and draining, resulting in high production costs. Furthermore, it is disadvantageous on account of the large amount (20-40%) of oil left in the fried products which causes the quality to deteriorate during long-term storage (oxidation of oil) and produces a foul smell and bad taste. The products cannot be powdered at normal temperature owing to the large amount of residual oil. The original color and taste of the raw materials is likewise adversely effected.

Processes of the prior art are referred in following references. Food Technology 20 (1966), 126-127 (1), describes a method of osmotic dehydration of fruits comprising contacting them with an aqueous solution containing a saccharide and subsequently drying them under reduced pressure.

US-A 3 194 670 relates to a method of drying food comprising contacting it with heated oil under reduced pressure and subsequently removing the excess oil, e.g. by centrifuging.

GB-A 282 611 relates to a method of treating foodstuff whereby the material is immersed in a non-aqueous liquid and heat-treated at a temperate below the boiling point of water at atmospheric pressure.

It is the object of the present invention to overcome the above disadvantages of the prior art process by providing a method for obtaining high quality dried food and plant products that can be stored for a long time without undergoing changes in properties, wherein the time required for manufacture is shortened, the amount of residual oil is remarkably decreased, natural color and taste of the raw materials are preserved, deterioration in quality is prevented and the processability of the products, such as pulverization or the like, is facilitated.

The method of manufacturing dried food and plant products according to the invention comprises the steps of

1) charging the products to be treated into a rotatable basket which is placed in an autoclave which can be pressurized/depressurized,

2) contacting the products with an aqueous solution containing at least one saccharide in a concentration of 15 to 50% by weight and a temperature of 40° to 80° C, if necessary, by spraying them therewith in the presence of pressurized steam wherein during pressurization the pressure in said autoclave is increased up to a maximum of 0.5 MPa

3) rapidly reducing the pressure after the contact with the saccharide solution ceases to a minimum of 665 to 2600 Pa.

4) repeating steps 2) and 3), if necessary,

5) contacting with oil wherein the oil has a temperature of 60 to 130° C under reduced pressure as mentioned above, and

6) after the contact with oil is stopped, rapidly rotating the basket under reduced pressure to remove water and oil.

The dehydration method of the present invention has the effect that the tissues of the treated products are loosened completely whereby the products are dehydrated. The products thus dehydrated are extremely dry and crisp, so that they can be instantly pulverized. They differ from the dehydrated prior art products, the tissues of which tend to stiffen as if they were condensed. Also the loosening of the tissues of the treated product allows the saccharide solution or oil to permeate more deeply into the material. In the prior art methods water is removed only from the surface by heating.

In the present invention the saccharide solution is used to remove the water osmotically via the cellular membrane. Oil is used as heating medium. Its temperature is maintained just high enough to evaporate water (lower than 100° C for vegetables and plants (e.g. leaves and flowers) and lower than 130° C for meat, fish etc.).

By repeating steps 2) and 3) several times, products having a considerable volume or having tightly bound tissues can be effectively and thoroughly dehydrated in a short period of time. For example, whole potatoes and pumpkins, fish of considerable size and prawns with shells can be thoroughly dehydrated without destroying the nutrients. As the final step, the materials thus dehydrated are subjected to centrifugation to remove the oil content.

In a preferred embodiment, the food or plant products to be treated are charged into the basket in the autoclave and contacted under pressure with an aqueous solution containing at least one saccharide to reduce the water content of the products. Said products are first treated at elevated pressure, which is then rapidly reduced. If necessary said step is repeated, and then said products are contacted with hot oil under reduced pressure. The water content of the products is finally reduced to about 0.1 to 4 %.

When a saccharide solution is injected into the products under high pressure, it permeates into the tissues and gets to contact the tissue cells as the pressure rises. On contacting the cells, the saccharide solution will remove the water from the cells by its osmotic pressure.

In the conventional vacuum frying method, the product is dehydrated only at the surface.

By rapidly reducing the elevated pressure, the saccharide solution that has permeated into the tissues is discharged almost like an explosion in liquid or partly in vapor from. As it leaves the tissues, the solution loosens and softens the tissues for instance in the case of popcorn and thus facilitates the permeation of the saccharide solution or oil in the subsequent steps. As the pressure decreases, the oil which has permeated into the death of the materials and heated the same from inside will be discharged from the tissues either in liquid or partly in vapor form together with the water present in the tissues.

It is clear from the foregoing that in the prior art vacuum frying method, the water vaporized by the frying heat is sucked off by a vacuum pump. The water remaining deep inside the material is not sucked off. Therefore, the vacuum frying method can only be used with materials that can be thinly sliced. Moreover, the food products obtained according to the prior art method have high residual water and oil contents. By contrast, the method of the present invention is suitable for treating food products of large volumes and different shapes, while leaving hardly any residual water or oil.

Although for products such as spinach and asparagus, it is not necessary to repeat the pressurization/depressurization step many times, larger sized products, such as potatoes, pumpkins, apples, fish, ham or shrimps, which are difficult to dehydrate, can be effectively dried by repeating steps 2) and 3) more than twice.

Products that can be treated according to the present invention comprise vegetables, plants and fruits, for example, onions, carrots, pumpkins, bamboo shoots, burdocks, spinach, tea, peppermint, Japanese daikon leaves (Raphanus sativus longipinnatus), green peppers, string beans, princess peas, asparagus, apples, persimmons, pears, kiwi fruit, melons, watermelons, bananas, strawberries, pickled plums, garlic and raisins; fish, for example sardines, round herrings, pond smelts, shrimps, squids, crabs, anchovies, scallops, pearl oysters and fish meat sausages and meat, for example pork meat. The method according to the present invention also lends itself to the processing of products such as ham, sausages, cream cheese and boiled fish paste. The method can also be used for plants containing pharmacologically active components or fragrances.

The color and freshness of the materials are relatively well preserved by the method of the present invention as it is performed at low temperature compared to other methods, such as the vacuum frying method. Blanching is better suited to preserve the original color and freshness of vegetables. The blanching conditions (treating solution, temperature, time etc.) differ depending on the products to be treated. Appropriate conditions are those commonly employed for blanching.

The autoclave may have any configuration and construction as long as the autoclave can be pressurized/depressurized, heated/cooled, and the products can be contacted with/separated from the liquid.

The medium for the osmotic solution is a saccharide solution, especially a solution of a monosaccharide or an oligosaccharide or mixtures thereof or mixtures with polysaccharides. Water is used as a solvent, but various salts and acids may also be added depending on the products to be treated. The saccharides are used to prevent the products to be treated from sticking to each other or breaking during the treatment.

The oil may be injected under elevated pressure either together with the osmotic solution or separately. Preferably the oil is injected under reduced pressure.

Unlike oligosaccharides, cornstarch has no dehydrating effect on the water contained in the cells. Oligosaccharides absorb relatively large amounts of water and, as mentioned above, prevent the products to be treated from sticking together or rubbing. Typical examples of useful monosaccharides and disaccharides are dextrose, fructose, saccharose and maltose and their mixtures, e.g. fructose-dextrose syrup (Isosweet® containing 29% water and 71% sugars, i.e. 50% dextrose, 42% fructose, 1.5% maltose, 1.5% isomaltose and 5% higher saccharides) and maize syrup. They are more effective in absorbing water.

According to the method of the invention the maximum pressure used during pressurization is 0.5 MPa. If the pressure is increased above said value the products to be treated lose their shape as they expand when the pressure is subsequently rapidly decreased. For practical purposes the minimum pressure of depressurization is from 665 to 2660 Pa.

The aqueous saccharide solution used has a saccharide concentration of 15 to 50% by weight and, when sprayed onto the product to be treated, has a temperature of 40° to 80° C.

As oil, any non-toxic or edible oil which is fluid at the working temperatures may be used. Preferred is an oil which is fluid at 8° C. The sprayed oil has a temperature of from 60° to 130° C, depending on the product to be treated. Examples of suitable oils are liquid paraffin of pharmaceutical quality, hardened vegetable oils, such as cotton seed oil, palm oil, rice oil, maize oil etc.

Prior to charging the products to be treated into the rotatable basket, they are advantageously

1) rinsed with water,

2) optionally sliced or cut,

3) immersed or blanched either directly after rinsing or after slicing or cutting, whereby said immersing or blanching is carried out in a permeating solution, such as brine, acid solution or sugar solution and, if blanched, the products are rapidly cooled after blanching.

The brine used for blanching has a salt (NaCl) content of 2 to 4% by weight, a temperature of 90° to 98° C or 40° to 60° C, depending on the product to be treated. Blanching is carried out for 0.5 or less to 3 minutes, depending on the product to be treated.

The brine used for immersing has a salt (NaCl) content of about 3% by weight. Immersing is performed for 30 to 60 minutes.

When comparing the method according to the present invention for preparing dried foods by osmotic pressure treatment (3) with the conventional vacuum freezing/drying method (1) or vacuum frying/drying methods (2), the method according to the present invention is found to be highly efficient and to yield products superior in quality, as shown below. The processing time required for vegetables, fruits or fish and shells for each method are as follows:

```
1. known freezing/drying process:   8-16 hours

2. known vacuum frying process:      6-13 hours (including
                                     immersion time)

3. osmotic pressure drying method
   according to the present inven-
   tion:                             2-6 hours (including
                                     immersion time)
```

As shown above, the time required to make dried foods and plants is greatly reduced by the osmotic pressure drying method of the present invention. As the quantity which can be processed in one cycle is large, the production efficiency is several times higher than that of the conventional methods. Thus, the results obtained are also satisfactory from the viewpoint of costs.

According to the osmotic pressure drying process of the present invention, an oil and/or fat (hardened oil) is discharged from the products in a decompression high-speed centrifugal separation treatment. Compared to the conventional frying or vacuum frying process at normal temperature, the amount of residual oil in the products is extremely small as can be seen in the following table. As the products do not suffer a change in quality such as taste, flavour and color that would be caused by the deterioration of the residual oil, they retain their original properties for a long time.

The results of tests wherein the osmotic pressure drying process of the present invention was compared with the conventional methods in respect of oil content, water content and oxidation and peroxide value in the oil, revealed that the products according to the invention possessed excellent quality which could not be obtained before. Preferred are those products having a moisture content of less than 1% by weight and an oil content of less than 10% by weight.

As the osmotic pressure drying method according to the present invention enables drying processing at low temperature, i.e. at 40° to 70° C in 30 minutes to 1 hour, the nutritious or pharmacologically interesting components of the raw materials are not destroyed when the water is removed. Moreover, the product of this invention is e.g. a highly-concentrated food.

The products treated with the osmotic pressure drying method according to the present invention have an extremely small amount of residual oils or fats and retain the color of the raw materials. It is therefore possible to pulverize them and obtain powdered products of excellent color and flavor. This powder is an excellent material for various processed foods and drugs.

5

Said powder may, for example, be used for confectioneries (cookies, Japanese biscuits, Japanese cakes, rice cakes, etc.) or for ice cream, ham and sausages.

Table I

RESIDUAL OIL CONTENT OF PRODUCTS TREATED BY THE FOLLOWING METHODS

| Products | Normal pressure frying method | Vacuum frying method | Present invention |
|----------|------------------------------|---------------------|-------------------|
| Potatoes | 40% or more | 30-40% | 10-15% |
| Apples | 40% or more | 15-20% | 5-10% |
| Carrots | 40% or more | 10-15% | 5-10% |
| Pumpkins | 35% or more | 15-25% | 10-15% |
| Onions | 40% or more | 15-25% | 5-15% |

Table II

WATER CONTENT OF PRODUCTS TREATED BY THE FOLLOWING METHODS

| Products | Normal pressure frying method | Vacuum frying method | Present invention |
|----------|------------------------------|---------------------|-------------------|
| Potatoes | 30% or more | 2.0-5.0% | 1,0-3,0% |
| Apples | 40% or more | 1,0-3,0% | 0,5-2,0% |
| Carrots | 35% or more | 1,0-3,0% | 0,5-2,0% |
| Pumpkins | 30% or more | 1,0-5,0% | 0,2-3,0% |
| Onions | 80% or more | 3,0-6,0% | 0,5-2,0% |

Table III

TIME WHEN THE PRODUCTS PREPARED BY THE FOLLOWING METHODS SHOW CHANGES

| Time | Apples | | Onions | | Carrots | | Pumpkins | |
|---|---|---|---|---|---|---|---|---|
| | AV | POV | AV | POV | AV | POV | AV | POV |
| **Vacuum frying method** | | | | | | | | |
| When manufactured | 0,2 | 3,0 | 0,2 | 3,0 | 0,2 | 4,0 | 0,2 | 6,0 |
| | 1,5 | 6,0 | 2,5 | 6,0 | 0,5 | 6,0 | 1,0 | 7,0 |
| | 3,0 | 15,0 | 0,5 | 15,0 | 0,5 | 10,0 | 1,5 | 10,5 |
| after 6 months | 6,0 | 45,0 | 10,0 | 50,0 | 6,5 | 35,0 | 3,5 | 35,0 |
| **Osmotic pressure drying method (present invention)** | | | | | | | | |
| When manufactured | 0,1 or less | 2,0 or less | 0,1 or less | 2,5 or less | 0,1 or less | 2,0 or less | 0,1 or less | 2,0 or less |
| | 0,2 | 6,0 | 0,2 | 5,0 | 0,2 | 3,0 | 0,2 | 3,0 |
| after 6 months | 1,0 | 25,0 | 1,0 | 15,0 | 1,0 | 20,0 | 1,5 | 15,0 |

Note: AV = acid value

POV = peroxide value

The examples illustrate the invention.

Example 1

(1) Fresh onions were washed, peeled, sliced or diced and immersed in the brine (NaCl content: 3-4%) at 40° to 60° C for 1-3 minutes. The onions were then rapidly cooled in cold water.

(2) The material pretreated as in step (1) above was charged into a wire basket located in an autoclave which can be pressurized/depressurized.

(3) An osmotic solution (dehydratizing solution) containing 10% of maltose, 20% of dextrin, 20% of lactose and 50% of water was obtained by mixing. The osmotic solution was heated to a temperature of 70-80°C and injected into the autoclave by means of a nozzle. The basket located in the autoclave was automatically controlled as to its gentle rotation and vertical movement, to ensure that the osmotic solution permeates the onions thoroughly. At the same time, steam was injected from a separate nozzle in order to raise the pressure in the vessel. Injection of steam was automatically suspended at a pressure of 0.2 MPa. Switch valves provided at the top and the bottom of the autoclave automatically open into a steam duct (665 to 2660 Pa) to rapidly reduce the pressure. The pressure was initially reduced to about 8000 Pa and after 3 to 5 minutes to 2660 Pa or less. The automatic switch valves were closed and said steps were repeated at elevated pressure. A non-toxic oil (hardened edible oil such as cotton seed oil or palm oil) contained in a tank was heated by a heater to a temperature of 110°C. Injection of steam and osmotic solution into the autoclave was suspended at the start of the injection of the oil. After 1 to 2 minutes, the pressure was rapidly reduced as mentioned above. A certain amount of oil was also charged into the depressurized vessel, in which the basket member was rocked vertically for 5-10 minutes. The oil was subsequently discharged via the bottom switch valve. The basket member was rotated at high speed for 5 minutes under reduced pressure (2660 Pa). After suspending the rotation, the pressure was reset to normal and the basket member was removed from the vessel.

The dehydrated sliced or diced onions thus obtained proved to be crisp and have excellent flavor, color and taste. Their residual oil content was less than 5% and their water content less than 1%. Pulverization of the dehydrated onions was very simple. The product had a good aroma especially suited for onion soup and other preserved food.

While in the conventional vacuum drying method the entire treatment required 12 hours for treating 30 kg of onions, the present invention method allowed 150 kg of onions to be treated in 1,5 hours. The present invention method evidently yielded dehydrated products of high quality which were prepared more efficiently in a very short period of time.

Example 2

The method of the invention was performed as in example 1, under the following conditions:
(1) Material: Carrots
(2) Blanching:
Fresh carrots were washed, peeled and immersed in a NaCl solution (brine) either in slices or uncut. After heating and rapidly cooling, the carrots were drained and placed into a wire basket.

```
(1) brine              NaCl content 3-4%
(2) heating            90-95°C
(3) immersion time     1-2 minutes
(4) rapid cooling
```

(3) Dehydration by osmotic action and treatment with an oil under elevated/reduced pressures:
The carrots thus pretreated were dehydrated according to the present invention using a pressurizing/depressurizing autoclave or evaporator, repeating pressurization and depressurization and using an osmotic solution and oil. The following conditions were employed:
1) osmotic solution:
dextrin 20%, malt syrup 20%, lactose 10%, water 50%; injection temperature: 70°C
2) Oil: mixture of cotton seed oil and palm oil with low oxide and peroxide values; oil temperature: 60-120°C
3) pressurization/depressurization
As in Example 1, the pressurization/depressurization cycle and other conditions for osmotic treatment and treatment with oil were selected to suit the material to be treated. The selected conditions were automatically controlled. The carrots were treated with the osmotic solution and oil while being pressurized with steam at 0.2 MPa. The treatment was repeated several times depending on the amount of material applying an oil temperature of between 100 and 120°C and utilizing the difference between the ambient pressure and the vessel pressure which was maintained at 2660 Pa.

The carrots thus dehydrated were then centrifuged at 650 rpm for 10-30 minutes so that the residual oil was less than 10%. The dehydrated carrots contained less than 1% of water. Original color and flavor were well preserved. When the material is cut into balls or used in the original form (20 mm or less in thickness), the time required for dehydration may vary somewhat.

Example 3

The steps described in Example 1 were performed under the following conditions:
(1) Material: spinach
(2) Blanching:
Spinach was cut to the desired size and washed before pretreating under the following blanching conditions:

```
1) brine                      NaCl content 2-3%
2) immersion temperature      90-95°C



3) immersion time             0.5 minutes or less
4) rapid cooling
```

(3) Dehydration by osmotic action and treatment with oil at elevated/reduced pressures:
The spinach thus pretreated was dehydrated according to the present invention using a pressurizing/depressurizing vessel or evaporator, repeating pressurization and depressurization and using osmotic solution and oil. The following conditions were employed.
  1) osmotic solution:
  dextrin 10%, lactose 20%, dextrose 10%, water 60%; injection temperature 40°C
  2) Oil: mixture of cotton seed oil, palm oil add rice oil having low oxide and peroxide values; oil temperature 90-105°C
  3) pressurization/depressurization
  As in Example 1, the pressurization/depressurization cycle and other conditions for osmotic treatment and treatment with oil were selected to suit the material to be treated. These conditions were automatically controlled.
  The spinach was treated with the osmotic solution and the oil while being pressurized with steam at 0.2 MPa. The treatment was repeated several times depending on the amount of material, applying an oil temperature of between 100 and 120°C and utilizing the difference between the ambient pressure and the vessel pressure which was maintained at 2660 Pa.
  The spinach thus dehydrated was then centrifuged at 650 rpm for 10-30 minutes so that the residual oil was less than 10%. The dehydrated spinach contained less than 1% of water. The original color and flavor were well preserved.

Example 4

The steps described in Example 1 were employed under the following conditions.
(1) Material: apples
(2) Blanching:
Fresh apples were washed and sliced before being immersed in brine. After draining, the apples were treated to prevent discolorization and preserve their freshness and were then placed into a wire basket.

```
1) brine                NaCl content 3%
2) heating              none
3) immersion time       60 minutes
4) rapid cooling
```

(3) Dehydration by osmotic action and treatment with oil at elevated/reduced pressures:
The apples thus pretreated were dehydrated according to the present invention, using a pressurizing/depressurizing vessel or evaporator, repeating pressurization and depressurization and using an osmotic solution and oil. The following conditions were employed:

1) Osmotic solution:

malt syrup 10%, dextrin 10%, lactose 5%, cornstarch 10% (cornstarch is to be dispersed), water 65%; injection temperature: 50°C

2) Oil: mixture of cotton seed oil, palm oil and rice oil having low oxide and peroxide values; oil temperature: 90-105°C

3) Pressurization/depressurization

As in Example 1, the pressurization/depressurization cycle and other conditions for osmotic treatment and treatment with oil were selected to suit the material to be treated. These conditions were automatically controlled.

The apples were treated with the osmotic solution and oil while being pressurized with steam at 0.2 MPa. The treatment was repeated several times depending on the amount of material, applying an oil temperature of between 95 and 105°C and utilizing the difference between the ambient pressure and the vessel pressure which was maintained at about 2000 Pa. The apples thus dehydrated were then centrifuged at 650 rpm for 10-30 minutes so that the residual oil was less than 10%. The dehydrated apples contained less than 1% of water. Original color and flavour were well preserved.

Example 5

The steps described in Example 1 were employed under the following conditions.

(1) Material: sardines

(2) Blanching:

Fresh or partially dried sardines were rinsed and immersed in their original form in the brine under the following conditions, drained and placed into a wire basket.

```
1) brine                    NaCl content 3%
2) heat                     not applied
3) immersion time           30 minutes
4) rapid cooling
```

(3) Dehydration by osmotic action and treatment with oil at elevated/reduced pressures:

The sardines thus pretreated were dehydrated according to the present invention using a pressurizing/depressurizing vessel or evaporator, repeating pressurization and depressurization and using an osmotic solution and oil. The following conditions were employed:

1) Osmotic solution:

malt syrup 10%, dextrin 10%, grape sugar 10%, water 70%; injection temperature: 60°C

2) Oil : mixture of cotton seed oil, palm oil and rice oil having low oxide and peroxide values; oil temperature: 90-110°C

3) pressurization/depressurization

As in Example 1, the pressurization/depressurization cycle and other conditions for osmotic treatment and treatment with oil were selected to suit the material to be treated. These conditions were automatically controlled. The sardines were treated with the osmotic solution and the oil while being pressurized with steam at 0.3 MPa. The treatment was repeated several times depending on the amount of the material, applying an oil temperature of between 90 and 110°C and utilizing the difference between the ambient pressure and the vessel pressure which was maintained at 2660 Pa.

The sardines thus dehydrated were then centrifuged at 650 rpm for 10-30 minutes so that the residual oil was less than 20%. The dehydrated sardines contained less than 2% of water. Original color and flavour were well preserved. As sardines by nature contain oil and fat, the amount of residual oil was somewhat higher than in the case of the other dehydrated products.

Example 6

The steps described in Example 1 were employed under the following conditions.

(1) Material: raw pork meat

(2) Blanching:

The pork meat was cut into pieces of suitable sizes less than 10 mm thick. The fat was removed. After

EP 0 212 583 B1

rinsing, the pork meat was immersed in brine, heated and rapidly cooled and drained before being treated. The pork meat cut into dices of 10 mm was placed into a wire basket.

1) brine                    NaCl content 3-4%
2) heating                  90-95°C
3) immersion time           1-2 minutes
4) rapid cooling

(3) Dehydration by osmotic action and treatment with oil under elevated/reduced pressures:
The pork meat thus pretreated was dehydrated according to the present invention using a pressurizing/depressurizing vessel or evaporator, repeating pressurization and depressurization and using an osmotic solution and oil. The following conditions were employed:
1) Osmotic solution:
dextrin 10%, lactose 10%, fructose 5%, malt syrup 10%, corn syrup 5%, water 60%; injection temperature: 60°C
2) Oil: mixture of cotton seed oil, palm oil and rice oil having low oxide and peroxide values;
Oil temperature: 110-125°C
3) pressurization/depressurization
As in Example 1, the pressurization/depressurization cycle and other conditions for osmotic treatment and treatment with oil were selected to suit the material to be treated. These conditions were automatically controlled. The pork meat was treated with the osmotic solution and the oil while being pressurized with steam at 0.2-0.3 MPa. The treatment was repeated several times depending on the amount of material applying an oil temperature of between 110 and 125°C and utilizing the difference between the ambient pressure and the vessel pressure which was maintained at 2660 Pa.
The pork meat thus dehydrated was then centrifuged at 650 rpm for 10-30 minutes so that the residual oil was less than 20%. The dehydrated product contained less than 2% of water. Original color and flavor were well preserved.

Example 7

The steps described in Example 1 were repeated under the following conditions.
(1) Material: potatoes
(2) Blanching:
Fresh potatoes were washed and peeled. Potatoes cut in slices or sticks, or left uncut if they were small, were heated and rapidly cooled under the conditions described below, then drained and placed into a wire basket.

1) brine                    NaCl content 3-4%
2) heating                  95-98°C
3) immersion time           2-3 minutes
4) rapid cooling

(3) Dehydration by osmotic action and treatment with oil at elevated/reduced pressures:
The potatoes thus pretreated were dehydrated according to the present invention using a pressurizing/depressurizing vessel or evaporator, repeating pressurization and depressurization and using an osmotic solution and oil. The following conditions were employed:
1) Osmotic solution:
dextrin 10%, malt syrup 5%, water 85%; injection temperature: 50°C
2) Oil: mixture of cotton seed oil, palm oil and rice oil having low oxide and peroxide values; Oil temperature: 90-110°C
3) pressurization/depressurization
As in Example 1, the pressurization/depressurization cycle and other conditions for osmotic treatment and heat treatment were selected to suit the material to be treated. These conditions were automati-

11

cally controlled. The potatoes were treated with the osmotic solution and the oil while being pressurized with steam at 0.2 MPa. The treatment was repeated several times depending on the amount of material used, applying an oil temperature of between 90 and 110°C and utilizing the difference between the ambient pressure and the vessel pressure which was maintained at about 2000 Pa.

The potatoes thus dehydrated were then centrifuged at 650 rpm for 10-30 minutes to that the residual oil was less than 10%. The dehydrated product contained less than 1% of water. Original color and flavor were well preserved.

## Claims

1. Method of manufacturing dried food and plant products comprising the steps of

   1) charging the products to be treated into a rotatable basket placed in an autoclave which can be pressurized/depressurized.

   2) contacting the products with an aqueous solution containing at least one saccharide in a concentration of 15 to 50% by weight and a temperature of 40° to 80°C, if necessary by spraying them therewith by application of pressurized steam wherein during pressurization the pressure in said autoclave is increased up to a maximum of 0.5 MPa.

   3) rapidly reducing the pressure after the contact with the saccharide solution ceases to a minimum of 665 to 2660 Pa.

   4) repeating steps 2) and 3), if necessary,

   5) contacting with oil wherein the oil has a temperature of 60 to 130°C under reduced pressure as mentioned above, and

   6) after the contact with oil is stopped, rapidly rotating the basket under reduced pressure to remove water and oil.

2. Method according to claim 1, wherein the pressure is increased up to 0.3 MPa.

3. Method according to claim 1 or 2, wherein the saccharide is a monosaccharide or preferably an oligosaccharide or a mixture thereof, optionally containing a polysaccharide.

4. Method according to claim 1, wherein the oil is sprayed either simultaneously with the saccharide solution or separately, preferably after the saccharide solution.

5. Method according to anyone of claims 1 and 4, wherein the oil used is an edible oil which is fluid at 8°C.

6. Method according to claim 1, wherein before being charged into the rotatable basket,

   1) the product to be treated is rinsed with water,

   2) the rinsed product is optionally sliced or cut,

   3) the product obtained in step 1) or step 2) above is immersed or blanched in a permeating solution, such as brine, acid solution or sugar solution and

   4) the blanched product is rapidly cooled.

7. Method according to claim 1, which further comprises the step of pulverizing the product obtained.

8. Product obtainable according to any one of claims 1 - 7, having a moisture content of less than 1% by weight and an oil content of less than 10% by weight.

## Revendications

1. Procédé de fabrication de produits alimentaires et végétaux séchés comprenant les étapes suivantes:

   1) le chargement des produits à traiter dans un panier rotatif placé dans un autoclave qui peut être pressurisé/dépressurisé,

   2) la mise en contact des produits avec une solution aqueuse contenant au moins un saccharide en une concentration de 15 à 50% en poids et à une température de 40 à 80°C, si nécessaire, par pulvérisation de celle-ci sur eux en présence de vapeur sous pression, la pression dans ledit autoclave au cours de la pressurisation étant augmentée jusqu'à un maximum de 0,5 MPa,

EP 0 212 583 B1

3) la réduction rapide de la pression jusqu'à un minimum de 665 à 2600 Pa une fois la mise en contact avec la solution de saccharide terminée,

4) la répétition des étapes 2) et 3), si nécessaire,

5) la mise en contact avec de l'huile ayant une température de 60 à 130°C sous pression réduite telle qu'indiquée ci-dessus, et

6) une fois la mise en contact avec l'huile arrêtée, la mise en rotation rapide du panier sous pression réduite pour retirer l'eau et l'huile.

2. Procédé selon la revendication 1, dans lequel la pression est augmentée jusqu'à 0,3 MPa.

3. Procédé selon la revendication 1 ou 2, dans lequel le saccharide est un monosaccharide ou de préférence un oligosaccharide ou un mélange de ceux-ci, contenant éventuellement un polysaccharide.

4. Procédé selon la revendication 1, dans lequel l'huile est pulvérisée en même temps que la solution de saccharide ou séparément, de préférence après la solution de saccharide.

5. Procédé selon l'une quelconque des revendications 1 et 4, dans lequel l'huile utilisée est une huile comestible qui est fluide à 8°C.

6. Procédé selon la revendication 1, dans lequel avant d'être chargé dans le panier rotatif,
   1) le produit à traiter est rincé à l'eau
   2) le produit rincé est éventuellement réduit en tranches ou coupé,
   3) le produit obtenu dans l'étape 1) ou l'étape 2) ci-dessus est plongé ou blanchi dans une solution de pénétration telle qu'une saumure, une solution d'acide ou une solution de sucre et
   4) le produit blanchi est refroidi rapidement.

7. Procédé selon la revendication 1, qui comprend en outre l'étape de réduction en poudre du produit obtenu.

8. Produit qui peut être obtenu selon l'une quelconque des revendications 1 à 7, ayant une teneur en humidité inférieure à 1% en poids et une teneur en huile inférieure à 10% en poids.

**Patentansprüche**

1. Verfahren zur Herstellung von getrockneten Nahrungs- und Pflanzenprodukten, umfassend die Stufen des
   1) Einbringens der zu behandelnden Produkte in einen drehbaren Korb, der sich in einem Autoklaven befindet, in dem Über- bzw. Unterdruck erzeugt werden kann,
   2) Zusammenbringens der Produkte mit einer wäßrigen Lösung, die mindestens ein Saccharid in einer Konzentration von 15 bis 50 Gew.-% und einer Temperatur von 40° bis 80°C enthält, wobei sie erforderlichenfalls unter Anwendung von unter Druck stehendem Dampf damit besprüht werden, wobei während der Druckerhöhung der Druck in dem Autoklaven auf ein Maximum von 0,5 MPa erhöht wird,
   3) raschen Verminderns des Drucks, nachdem der Kontakt mit der Saccharidlösung aufhört, auf ein Minimum von 665 bis 2660 Pa,
   4) Wiederholens der Stufen 2) und 3), falls erforderlich,
   5) Zusammenbringens mit einem Öl, wobei das Öl eine Temperatur von 60 bis 130°C hat, unter vermindertem Druck, wie vorstehend erwähnt, und
   6) nach Beendigung des Kontaktes mit dem Öl raschen Drehens des Korbes unter vermindertem Druck zur Entfernung von Wasser und Öl.

2. Verfahren nach Anspruch 1, wobei der Druck auf 0,3 MPa erhöht wird.

3. Verfahren nach Anspruch 1 oder 2, wobei das Saccharid ein Monosaccharid oder vorzugsweise ein Oligosaccharid oder ein Gemisch davon darstellt, das gegebenenfalls ein Polysaccharid enthält.

4. Verfahren nach Anspruch 1, wobei das Öl entweder gleichzeitig mit der Saccharidlösung oder getrennt davon, vorzugsweise nach der Saccharidlösung aufgesprüht wird.

13

5. Verfahren nach einem der Ansprüche 1 und 4, wobei das eingesetzte Öl ein eßbares Öl ist, das bei 8°C flüssig wird.

6. Verfahren nach Anspruch 1, wobei vor dem Einbringen in den drehbaren Korb
   1) das zu behandelnde Produkt mit Wasser gespült wird,
   2) das gespülte Produkt gegebenenfalls in Scheiben oder Stücke geschnitten wird,
   3) das in Stufe 1) oder Stufe 2) erhaltene Produkt in eine eindringende Lösung, wie Kochsalz-, Säure- oder Zuckerlösung, eingetaucht oder blanchiert wird, und
   4) das blanchierte Produkt rasch abgekühlt wird.

7. Verfahren nach Anspruch 1, welches zusätzlich die Stufe der Pulverisierung des erhaltenen Produktes umfaßt.

8. Nach einem der Ansprüche 1 bis 7 erhältliches Produkt mit einem Feuchtigkeitsgehalt von weniger als 1 Gew.-% und einem Ölgehalt von weniger als 10 Gew.-%.